# EUROPEAN PATENT APPLICATION

(11) **EP 4 488 782 A1**
(43) Date of publication of application: **08.01.2025**
(21) Application number: 24187070.8
(22) Date of filing: 08.07.2024
(51) Int. Cl.: G05B 23/02, G06N 3/00

(54) **AIRCRAFT ENGINE DATA ACQUISITION USING THERMAL NEUROMORPHIC SENSORS**

(30) Priority: 07.07.2023 US 202363512454 P
(71) Applicant: RTX Corporation, Farmington, CT 06032 (US)
(72) Inventor: URBAN, Justin R., Farmington, 06032 (US); CONSIGLIO, Andrew A., Farmington, 06032 (US); WARREN, Eli, Farmington, 06032 (US); HALDEMAN, Charles W., Farmington, 06032 (US); REDDY, Kishore K., Farmington, 06032 (US)
(74) Representative: Dehns

(57) **Abstract**

Embodiments of the present disclosure generally relate to aircraft engines (20) and, more particularly to data acquisition for aircraft engines (20) using thermal neuromorphic sensors (206). In some embodiments, an event associated with the aircraft engine (20) may be identified based on a change in a thermal data characteristic measured from a thermal neuromorphic sensor (206). In response to identifying the event associated with the aircraft engine (20), one or more other sensors (206) coupled to the aircraft engine (20) may be activated and data received from the activated sensors (206) stored in memory (212). Other embodiments may be disclosed or claimed.

## Description

### TECHNICAL FIELD

The subject matter disclosed herein generally relates to aircraft engines and particularly to aircraft engine data acquisition using thermal neuromorphic sensors.

### BACKGROUND

Engines, such as gas turbine engines, hydroelectric turbine engines, and/or the like, can be used to provide thrust to aircraft and/or other types of vehicles. In some cases, such engines can include one or more sensors to monitor the status of the engine and detect anomalies occurring within the engine. For example, a temperature sensor can sense temperature within the engine (or within a section of the engine) and can indicate when an anomaly has occurred, such as the measured temperature exceeding a temperature threshold.

Neuromorphic sensors are sensors that detect changes in data characteristics monitored by the neuromorphic sensor. For example, a visual neuromorphic sensor (also referred to as an "event camera") may detect local changes to an image of a monitored object, such as a change in a pixel of the image, a change in brightness in the image, and/or a change in illumination level. In contrast to sensors that synchronously report a data characteristic at predetermined intervals (regardless of whether the data characteristic changes), a neuromorphic sensor asynchronously reports only the changes to the data characteristic.

### BRIEF DESCRIPTION

In one exemplary embodiment, a data acquisition system for an aircraft engine is provided. The data acquisition system comprises a thermal neuromorphic sensor coupled to the aircraft engine, a processor coupled to the thermal neuromorphic sensor, and memory coupled to the processor. The memory stores instructions that, when executed by the processor, cause the data acquisition system to receive first data from the thermal neuromorphic sensor, the first data including a thermal data characteristic associated with the aircraft engine, and receive second data from the thermal neuromorphic sensor subsequent to receiving the first data, wherein the second data indicates a change in the thermal data characteristic. The memory further stores instructions to cause the data acquisition system to identify, based on the change in the thermal data characteristic, an event associated with the aircraft engine. In response to identifying the event associated with the aircraft engine, the data acquisition system ma activate at least one other sensor coupled to the aircraft engine and in communication with the data acquisition system and store data received from the at least one other sensor in the memory.

In addition to one or more of the features described herein, or as an alternative, further embodiments of the data acquisition system may include that the event associated with the aircraft engine is based on an amount of change in a value of the thermal data characteristic meeting or exceeding a predetermined threshold.

In addition to one or more of the features described herein, or as an alternative, further embodiments of the data acquisition system may include that the identified event is associated with a blade of the aircraft engine rubbing against another component of the aircraft engine.

In addition to one or more of the features described herein, or as an alternative, further embodiments of the data acquisition system may include that the identified event is associated with a thermal barrier coating spallation for a component of the aircraft engine.

In addition to one or more of the features described herein, or as an alternative, further embodiments of the data acquisition system may include that the identified event is associated with a cooling port blockage in the aircraft engine.

In addition to one or more of the features described herein, or as an alternative, further embodiments of the data acquisition system may include that the data received from the at least one other sensor is stored in the memory over a predetermined time period subsequent to identifying the event.

In addition to one or more of the features described herein, or as an alternative, further embodiments of the data acquisition system may include that the memory further stores instructions to cause the data acquisition system to transmit an electronic communication to a computing device of a user that includes an indication of the event associated with the aircraft engine.

In another exemplary embodiment, a computer-readable medium is provided. The computer-readable medium stores instructions that, when executed by a data acquisition system, cause the data acquisition system to receive first data from a thermal neuromorphic sensor coupled to an aircraft engine, the first data including a thermal data characteristic associated with the aircraft engine. The memory further stores instructions to cause the data acquisition system to receive second data from the thermal neuromorphic sensor subsequent to receiving the first data, wherein the second data indicates a change in the thermal data characteristic. The memory further stores instructions to cause the data acquisition system to identify, based on the change in the thermal data characteristic, an event associated with the aircraft engine. In response to identifying the event associated with the aircraft engine, the data acquisition system may activate at least one other sensor coupled to the aircraft engine and in communication with the data acquisition system and store data received from the at least one other sensor in a memory.

In addition to one or more of the features described herein, or as an alternative, further embodiments of the computer-readable medium may include that the event associated with the aircraft engine is based on an amount of change in a value of the thermal data characteristic meeting or exceeding a predetermined threshold.

In addition to one or more of the features described herein, or as an alternative, further embodiments of the computer-readable medium may include that the identified event is associated with a blade of the aircraft engine rubbing against another component of the aircraft engine.

In addition to one or more of the features described herein, or as an alternative, further embodiments of the computer-readable medium may include that the identified event is associated with a thermal barrier coating spallation for a component of the aircraft engine.

In addition to one or more of the features described herein, or as an alternative, further embodiments of the computer-readable medium may include that the identified event is associated with a cooling port blockage in the aircraft engine.

In addition to one or more of the features described herein, or as an alternative, further embodiments of the computer-readable medium may include that the data received from the at least one other sensor is stored in the memory over a predetermined time period subsequent to identifying the event.

In addition to one or more of the features described herein, or as an alternative, further embodiments of the computer-readable medium may include that the medium further stores instructions to cause the data acquisition system to transmit an electronic communication to a computing device of a user that includes an indication of the event associated with the aircraft engine.

In another exemplary embodiment, a computer-implemented method is provided. The computer-implemented method comprises receiving, by a data acquisition system, first data from a thermal neuromorphic sensor coupled to an aircraft engine, the first data including a thermal data characteristic associated with the aircraft engine. The computer-implemented method further comprises receiving, by the data acquisition system, second data from the thermal neuromorphic sensor subsequent to receiving the first data, wherein the second data indicates a change in the thermal data characteristic. The computer-implemented method further comprises identifying, by the data acquisition system and based on the change in the thermal data characteristic, an event associated with the aircraft engine. The computer-implemented method further comprises, in response to identifying the event associated with the aircraft engine, activating, by the data acquisition system, at least one other sensor coupled to the aircraft engine and in communication with the data acquisition system and storing, by the data acquisition system, data received from the at least one other sensor in a memory coupled to the data acquisition system.

In addition to one or more of the features described herein, or as an alternative, further embodiments of the computer-implemented method may include that the event associated with the aircraft engine is based on an amount of change in a value of the thermal data characteristic meeting or exceeding a predetermined threshold.

In addition to one or more of the features described herein, or as an alternative, further embodiments of the computer-implemented method may include that the identified event is associated with a blade of the aircraft engine rubbing against another component of the aircraft engine.

In addition to one or more of the features described herein, or as an alternative, further embodiments of the computer-implemented method may include that the identified event is associated with a thermal barrier coating spallation for a component of the aircraft engine.

In addition to one or more of the features described herein, or as an alternative, further embodiments of the computer-implemented method may include that the identified event is associated with a cooling port blockage in the aircraft engine.

In addition to one or more of the features described herein, or as an alternative, further embodiments of the computer-implemented method may include that the data received from the at least one other sensor is stored in the memory over a predetermined time period subsequent to identifying the event.

The above features and advantages, and other features and advantages, of the disclosure are readily apparent from the following detailed description when taken in connection with the accompanying drawings.

### BRIEF DESCRIPTION OF THE DRAWINGS

The following descriptions should not be considered limiting in any way. With reference to the accompanying drawings, like elements are numbered alike:
FIG. 1 is a partial cross-sectional illustration of a gas turbine engine in accordance with an embodiment of the disclosure;
FIG. 2 is a block diagram of an example of an engine control system configured to monitor and control operation of a gas turbine engine in real-time (or near-real time) according to one or more embodiments described herein; and
FIG. 3 is a flow diagram of a method for aircraft engine data acquisition according to one or more embodiments described herein.

### DETAILED DESCRIPTION

A detailed description of one or more embodiments of the disclosed apparatus and method are presented herein by way of exemplification and not limitation with reference to the Figures.

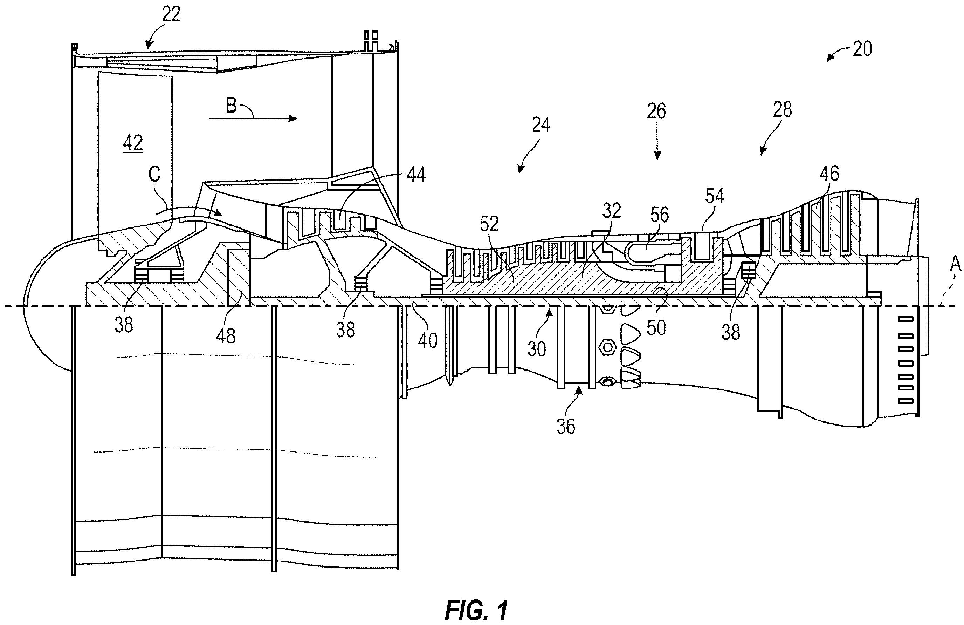

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, the concepts described herein are not limited to use with two-spool turbofans as the teachings may be applied to other types of turbine engines, including three-spool architectures.

The exemplary engine 20 generally includes a low-speed spool 30 and a high-speed spool 32 mounted for rotation about an engine central longitudinal axis A relative to an engine static structure 36 via several bearing systems 38. In some embodiments, various bearing systems 38 at various locations may alternatively or additionally be provided, and the location of bearing systems 38 may be varied as appropriate to the application.

The low-speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low-speed spool 30. The high-speed spool 32 includes an outer shaft 50 that interconnects a high pressure compressor 52 and high pressure turbine 54. A combustor 56 is arranged in exemplary gas turbine 20 between the high-pressure compressor 52 and the high-pressure turbine 54. An engine static structure 36 is arranged generally between the high-pressure turbine 54 and the low-pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low-pressure compressor 44 then the high-pressure compressor 52, mixed and burned with fuel in the combustor 56, then expanded over the high-pressure turbine 54 and low pressure turbine 46. In some embodiments, stator vanes 45 in the low-pressure compressor 44 and stator vanes 55 in the high-pressure compressor 52 may be adjustable during operation of the gas turbine engine 20 to support various operating conditions. In other embodiments, the stator vanes 45, 55 may be held in a fixed position. The turbines 46, 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. It should be understood, however, that the above parameters are only exemplary of one embodiment of a geared architecture engine and that the present disclosure is applicable to other gas turbine engines including direct drive turbofans.

While the example of FIG. 1 illustrates one example of the gas turbine engine 20, in alternate embodiments any number of spools, inclusion or omission of the gear system 48, and/or other elements and subsystems are contemplated. Further, rotor systems described herein can be used in a variety of applications and need not be limited to gas turbine engines for aircraft applications. For example, rotor systems can be included in power generation systems, which may be ground-based as a fixed position or mobile system, and other such applications.

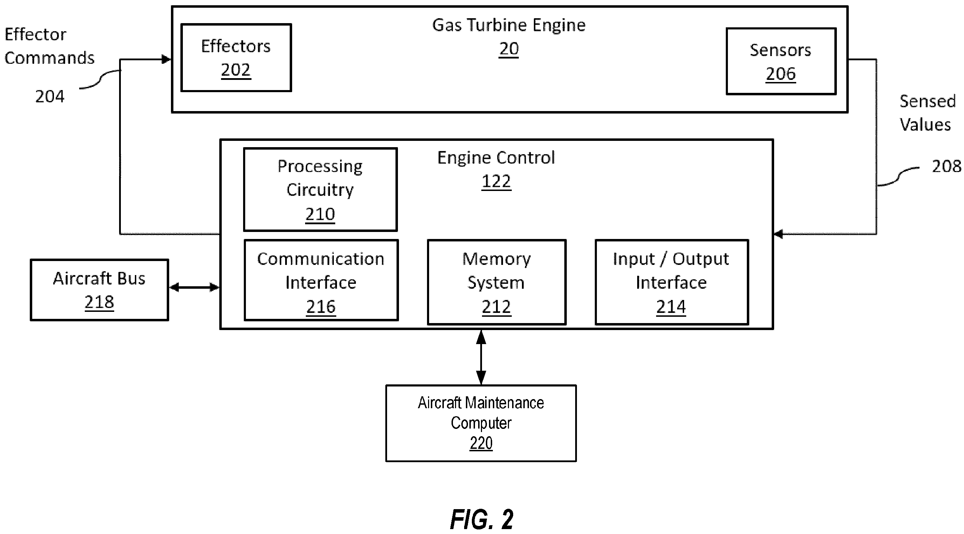

FIG. 2 depicts an example of an engine control system 122 configured to monitor and control operation of a gas turbine engine (e.g., the gas turbine engine 20) in real-time (or near-real time) according to one or more embodiments described herein. In some embodiments, the engine control system 122 performs the functionality of a data acquisition system by receiving, processing, storing and reporting data received from one or more sensors 206.

The engine control system 122 can control effectors 202 of the gas turbine engine 20 by generating one or more effector commands 204. Examples of effectors 202 can include one or more motors, solenoids, valves, relays, pumps, heaters, and/or other such actuation control components. A plurality of sensors 206 can capture state data associated with the gas turbine engine 20 and provide sensed values 208 as feedback to the engine control system 122 to enable closed-loop control of the gas turbine engine 20 according to one or more control laws. Examples of the sensors 206 can include one or more temperature sensors, pressure sensors, strain gauges, speed sensors, accelerometers, lube sensors, and the like. In some embodiments, sensors 206 may include one or more neuromorphic sensors.

The engine control system 122 (also referred to as a "controller") can be a full authority digital engine control (FADEC) that includes processing circuitry 210 (also referred to as a "processing device") and a memory system 212 (also referred to as a "memory") configured to store a plurality of configuration items, where at least one of the configuration items includes a sequence of the computer executable instructions for execution by the processing circuitry 210. Other types of configuration items can include data, such as constants, configurable data, and/or fault data. Examples of computer executable instructions can include boot software, operating system software, and/or application software. The executable instructions may be stored or organized in any manner and at any level of abstraction, such as in connection with controlling and/or monitoring operation of the gas turbine engine 20. The processing circuitry 210 can be any type or combination of central processing unit (CPU), including one or more of: a microprocessor, a digital signal processor (DSP), a microcontroller, an application specific integrated circuit (ASIC), a field programmable gate array (FPGA), or the like. Also, in embodiments, the memory system 212 may include volatile memory, such as random access memory (RAM), and non-volatile memory, such as Flash memory, read only memory (ROM), and/or other electronic, optical, magnetic, or any other computer readable medium onto which is stored data and algorithms in a non-transitory form.

The engine control system 122 can also include one or more of an input/output interface 214, a communication interface 216, and/or other elements. The input/output interface 214 can include support circuitry for interfacing with the effectors 202 and sensors 206, such as filters, amplifiers, digital-to-analog converters, analog-to-digital converters, and other such circuits to support digital and/or analog interfaces. Further, the input/output interface 214 can receive or output signals to/from other sources, such as discrete inputs/outputs and/or status signals. The communication interface 216 may communicate with an aircraft bus 218 of an aircraft. The aircraft bus 218 can provide aircraft-level parameters and commands that are used by the engine control system 122 to control the gas turbine engine 20 in real-time. The communication interface 216 may also support communication with other components, such as other instances of the engine control system 122, storage units, diagnostic units, communication adapters, off-board systems, and the like. For example, the communication interface 216 may support communication with an aircraft maintenance computer 220 to provide for communication between (e.g., transmitting commands/data to and/or receiving commands/data from) the engine control system 122 and the aircraft maintenance computer 220.

The engine control system 122 provides for, among other things, monitoring the gas turbine engine 20 based on data collected by the sensors 206. The gas turbine engine 20 is one example of an aircraft engine, and other examples are also possible, such as hybrid electric turbine engines. It may be desirable to monitor properties of the gas turbine engine 20, such as temperature, pressure, flow rate, etc. to detect problems, such as anomalies, with the gas turbine engine 20.

As introduced above, conventional synchronous sensors used in conjunction with aircraft engine monitoring and fault detection generate massive amounts of data. In particular, large volumes of data collected at relatively high frequencies from multiple sensors on an aircraft engine poses challenges both in terms of being able to adequately analyze the data efficiently, and also to storing such data - particularly on an aircraft with limited data storage and processing capabilities.

Embodiments of the present disclosure address these and other issues by utilizing data acquisition systems (e.g., using control system 122 in FIG. 2) in conjunction with neuromorphic sensors which detect and report a change in a measured data characteristic. For a thermal neuromorphic sensor comprising an infrared camera, for example, the sensor only reports on changes to thermal data characteristics of an image captured by the camera, such as when something moves through the field of view of the camera or a temperature of an object in the image changes.

In contrast to conventional sensors that stream data synchronously (e.g., every millisecond) and continuously regardless of whether the measured data characteristic changes, the neuromorphic sensor provides data asynchronously and only upon detecting a change in the monitored data characteristic. This can dramatically reduce the amount of data that needs to be analyzed and stored by the control system 122.

Some embodiments may operate in conjunction with a thermal neuromorphic sensor adapted to detect data characteristics within the infrared end of the spectrum. For example, in embodiments utilized in conjunction with jet engine and rig testing, there are numerous situations where the jet engine being tested operates nominally and data collected using conventional sensors is of little use and unnecessarily consumes data processing and storage resources. However, when an event associated with a failure condition occurs (such as a fan blade or compressor blade rub, or spallation of a thermal barrier coating in a combustor) it is often desirable to collect and analyze as much data as possible from the various sensors coupled to the jet engine.

In some embodiments, a thermal neuromorphic sensor may be utilized to monitor features and components of an aircraft engine in the infrared spectrum and to activate other sensors in response to detecting an event that warrants such activation. For example, the control system 122 may monitor the aircraft engine 20 using one or more thermal neuromorphic sensors (from sensors block 206 in FIG. 2) and, as long as the engine 20 runs within nominal parameters, the control system 122 may leave some or all of the other conventional sensors from sensors block 206 inactive. Upon detecting an event based on changes in the data from the neuromorphic sensor, the control system 122 may activate one or more other sensors to collect additional data to, for example, diagnose a potential anomaly associated with the aircraft engine 20. In this manner, the control system 122 minimizes the amount of data from the sensors 206 that must be analyzed and stored during nominal operating conditions, and can quickly and efficiently bring some or all of the sensors 206 active to diagnose potential fault conditions.

For example, in a typical experimental test engine, there may be thousands of sensors coupled to the test engine to measure various components of the engine. Limiting the activation of these sensors to those that are necessary to measuring the state of the test engine during its current mode of operation can save immensely on the amount of data processing and storage resources required to analyze the test engine. Similarly, on production engines mounted on an aircraft with limited data processing and storage capabilities, embodiments of the present disclosure can efficiently focus the aircraft's limited resources to identifying potential fault conditions in real-time or near-real-time instead of analyzing large amounts of data during nominal operating conditions. Embodiments of the present disclosure can also be used to generate alerts (e.g., via electronic communications to warning systems coupled to an aircraft) to appropriate users of events identified based on changes in data from neuromorphic sensors to all the users to take appropriate action.

Embodiments of the present disclosure may operate in conjunction with any suitable number and type of neuromorphic sensor. In some embodiments, for example, one or more audio neuromorphic sensors may be used to analyze changes in sounds from one or more components of the aircraft engine 20. Such sound changes may be used to detect anomalies and trigger additional run time, data acquisition (e.g., using additional sensors), or turnback of a production engine due to an issue before release.

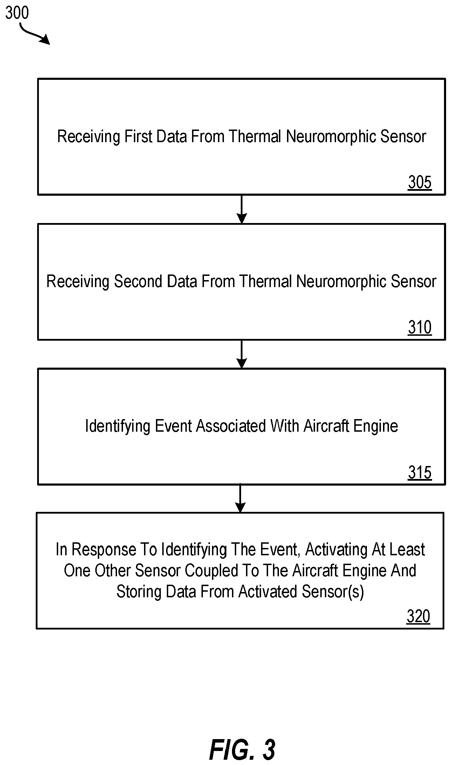

FIG. 3 is a flow diagram of a method 300 for aircraft engine data acquisition according to one or more embodiments described herein. The method 300 can be implemented using any suitable device or system, or combinations of devices or systems. For example, in some embodiments method 300 is performed by a data acquisition system implemented using engine control system 122 (e.g., a FADEC) illustrated in FIG. 2. The process depicted in FIG. 3 represents an exemplary illustration, and other processes (in whole or in part) may be added or removed, modified, or rearranged in conjunction with the embodiments of the present disclosure.

In this example, method 300 includes, at 305, receiving first data from a thermal neuromorphic sensor coupled to an aircraft engine, the first data including a thermal data characteristic associated with the aircraft engine. The method further includes, at 310, receiving second data from the thermal neuromorphic sensor subsequent to receiving the first data, wherein the second data indicates a change in the thermal data characteristic. The method 300 further includes, at 315, identifying, based on the change in the thermal data characteristic, an event associated with the aircraft engine. The method 300 further includes, at 320, in response to identifying the event associated with the aircraft engine: activating at least one other sensor coupled to the aircraft engine and in communication with the data acquisition system and storing data received from the at least one other sensor in a memory.

In some embodiments, the event associated with the aircraft engine is based on an amount of change in a value of the thermal data characteristic meeting or exceeding a predetermined threshold. For example, an object within the image may have a first level of thermal energy in the first data, which increases to second level of thermal energy in the second data. In some embodiments, an event may be identified based on the second level of thermal energy meeting exceeding a predetermined threshold. Additionally or alternatively, an event associated with engine 20 may be identified based on the magnitude of change of the thermal data characteristic between the first data and second data.

The identified event may be associated with a variety of defects or fault conditions associated with the engine 20. For example, in some embodiments, the identified event is associated with a blade of the aircraft engine rubbing against another component of the aircraft engine. In another example, the identified event is associated with a thermal barrier coating spallation for a component of the aircraft engine. In another example, the identified event is associated with a cooling port blockage in the aircraft engine.

In some embodiments, the engine control system 122 may store the data received from the activated other sensors in a memory, such as memory system 212 in FIG. 2. The received data from the activated sensor(s) may be stored over a predetermined time period subsequent to identifying the event, and may be stored together (e.g., in a common data structure or database entry) with data associated with the event from the thermal neuromorphic sensor.

In some embodiments, the engine control system 122 may transmit an electronic communication to a computing device of a user that includes an indication of the event associated with the aircraft engine, such as aircraft maintenance computer 220 in FIG. 2, or another device.

Embodiments of the present disclosure may operate in conjunction with any number and type of different neuromorphic sensors. In the example depicted in FIG. 2, neuromorphic sensors from sensors 206 can be coupled to the exterior or interior of the gas turbine engine 20 to monitor, for example, the engine air flow stream through the gas turbine engine 20 to detect anomalies. Neuromorphic sensors may also be disposed within a suitable distance of the engine 20 to measure various data characteristics.

For example, the neuromorphic sensor may include an audio (acoustic) sensor configured to detect engine sounds that could lead to early detection and isolation of issues within the engine 20. Changes in sounds monitored by the neuromorphic sensor may be indicative of, for example, issues such as bearing failing, thrust reverser system not responding to commands, engine actuators failing, air leaks, and other fault conditions.

In another example, a neuromorphic image sensor can detect similar fault conditions, such as air leaks, ruptured pipes, hydraulic fluid leak, oil leak, engine actuator improperly moving, sticking, or erratic movement/behavior, objects ingested into the engine, and other fault conditions. Such conditions can be identified in real-time or near-real-time during various states of movement of aircraft, including ground movement, taxi, and/or operational flight phases.

In some embodiments, an event associated with the engine 20 may be identified using a neural network trained to detect anomalies of an aircraft engine. More specifically, the present techniques can incorporate and utilize rule-based decision making and artificial intelligence (AI) reasoning to accomplish the various operations described herein, namely detecting anomalies of an aircraft engine based on data from one or more neuromorphic sensors. The phrase "machine learning" broadly describes a function of electronic systems that learn from data. A machine learning system, engine, or module can include a trainable machine learning algorithm that can be trained, such as in an external cloud environment, to learn functional relationships between inputs and outputs, and the resulting model can be used for detecting anomalies of an aircraft engine. In one or more embodiments, machine learning functionality can be implemented using an artificial neural network (ANN) having the capability to be trained to perform a currently unknown function, such as detecting and classifying an event associated with a change in a data characteristic as indicating an aircraft engine anomaly. In machine learning and cognitive science, ANNs are a family of statistical learning models inspired by the biological neural networks of animals, and in particular the brain. ANNs can be used to estimate or approximate systems and functions that depend on a large number of inputs. Convolutional neural networks (CNN) are a class of deep, feed-forward ANN (FNN) that are particularly useful at analyzing visual imagery.

ANNs can be embodied as so-called "neuromorphic" systems of interconnected processor elements that act as simulated "neurons" and exchange "messages" between each other in the form of electronic signals. Similar to the so-called "plasticity" of synaptic neurotransmitter connections that carry messages between biological neurons, the connections in ANNs that carry electronic messages between simulated neurons are provided with numeric weights that correspond to the strength or weakness of a given connection. The weights can be adjusted and tuned based on experience, making ANNs adaptive to inputs and capable of learning. For example, an ANN for handwriting recognition is defined by a set of input neurons that can be activated by the pixels of an input image. The learning rate can be adjusted for various types of aircraft engine events, as well as to avoid local minima. After being weighted and transformed by a function determined by the network's designer, the activation of these input neurons are then passed to other downstream neurons, which are often referred to as "hidden" neurons. This process is repeated until an output neuron is activated. The activated output neuron determines which character was read. It should be appreciated that these same techniques can be applied in the case of detecting anomalies of an aircraft engine. For example, data associated with various anomalies can be input into a machine learning algorithm and, over the course of multiple training cycles, parameters of the algorithm (e.g., weights, biases, etc.) can be adjusted to detect anomalies based on the input training data. The model can be tested against data other than the training data. Once trained (and optionally tested), the model can be deployed to perform inference, that is to detect anomalies of an aircraft engine.

The placement of the sensors 206 can vary depending on engine type (e.g., military versus commercial engines, small versus large commercial engines, afterburning versus non-afterburning engines, and/or the like, including combinations and/or multiples thereof). Design of one or more of the sensors 206 can vary depending upon install location. In some embodiments, the neuromorphic sensors in sensors 206 report data asynchronously in response to a change in a measured data characteristic. Non-neuromorphic sensors in sensor block 206 may be sampled (e.g., by the engine control 122) at intervals (such as a one second sample interval rate between each sensor sample with a one-minute interval before resampling). Other intervals can also be implemented and can change over time, such as based on sensed conditions. Sensor sampling intervals/rates can vary depending upon installation configuration engine requirements, design configuration, and/or the like, including combinations and/or multiples thereof.

Upon the detection of an event (such as an anomaly or fault condition) that may require maintenance or pilot intervention, a corrective action can be taken and/or an alert can be issued. For example, the pilot may change a power setting (e.g., a corrective action) for the gas turbine engine 20 responsive to the system 122 detecting an anomaly based on data from one or more of the sensors 206. As another example, a fire suppression system can be activated responsive to the control system 122 detecting an anomaly (e.g., an electrical fire). Further, the engine control system 122 can issue an alert, such as to the pilot and/or to maintenance crew, that an anomaly has been detected along with data about the anomaly.

One or more embodiments described herein can be applied not only to the gas turbine engine 20 shown in FIGs. 1 and 2 but to other types of engines as well, such as commercial aircraft engines, military aircraft engines, auxiliary power units for aircraft, hybrid electric turbine engines, electric engines, and/or the like, including combinations and/or multiples thereof, including engines that user other sources of power, such as steam, hydrogen, and/or another type of alternative fuel.

It should be appreciated that one or more embodiments described herein provide for improving the functioning of aircraft and thus improve aircraft technology. For example, the techniques described herein provide for enhanced data acquisition and anomaly detection in aircraft engines using neuromorphic sensors. Among other things, the event-driven data acquisition of the embodiments of the present disclosure helps reduce data storage requirements from conventional systems, and can more quickly and efficiently pinpoint anomalies in aircraft engines by activating additional sensors in response to an event identified from a neuromorphic sensor. This provides for improved anomaly detection and troubleshooting.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A data acquisition system for an aircraft engine (20), the data acquisition system comprising:
a thermal neuromorphic sensor (206) coupled to the aircraft engine (20);
a processor (210) coupled to the thermal neuromorphic sensor (206); and
memory (212) coupled to the processor (210) and storing instructions that, when executed by the processor (210), cause the data acquisition system to:
receive first data from the thermal neuromorphic sensor (206), the first data including a thermal data characteristic associated with the aircraft engine (20);
receive second data from the thermal neuromorphic sensor (206) subsequent to receiving the first data, wherein the second data indicates a change in the thermal data characteristic;
identify, based on the change in the thermal data characteristic, an event associated with the aircraft engine (20); and
in response to identifying the event associated with the aircraft engine (20):
activate at least one other sensor (206) coupled to the aircraft engine (20) and in communication with the data acquisition system; and
store data received from the at least one other sensor (206) in the memory (212).

2. The data acquisition system of claim 1, wherein the memory (212) further stores instructions to cause the data acquisition system to transmit an electronic communication to a computing device (218) of a user that includes an indication of the event associated with the aircraft engine (20).

3. A computer-readable medium (212) storing instructions that, when executed by a data acquisition system, cause the data acquisition system to:
receive first data from a thermal neuromorphic sensor (206) coupled to an aircraft engine (20), the first data including a thermal data characteristic associated with the aircraft engine (20);
receive second data from the thermal neuromorphic sensor (206) subsequent to receiving the first data, wherein the second data indicates a change in the thermal data characteristic;
identify, based on the change in the thermal data characteristic, an event associated with the aircraft engine (20); and
in response to identifying the event associated with the aircraft engine (20):
activate at least one other sensor (206) coupled to the aircraft engine (20) and in communication with the data acquisition system; and
store data received from the at least one other sensor (206) in a memory (212).

4. The computer-readable medium (212) of claim 3, wherein the medium (212) further stores instructions to cause the data acquisition system to transmit an electronic communication to a computing device (218) of a user that includes an indication of the event associated with the aircraft engine (20).

5. A computer-implemented method, comprising:
receiving, by a data acquisition system, first data from a thermal neuromorphic sensor (206) coupled to an aircraft engine (20), the first data including a thermal data characteristic associated with the aircraft engine (20);
receiving, by the data acquisition system, second data from the thermal neuromorphic sensor (206) subsequent to receiving the first data, wherein the second data indicates a change in the thermal data characteristic;
identifying, by the data acquisition system and based on the change in the thermal data characteristic, an event associated with the aircraft engine (20); and
in response to identifying the event associated with the aircraft engine (20):
activating, by the data acquisition system, at least one other sensor (206) coupled to the aircraft engine (20) and in communication with the data acquisition system; and
storing, by the data acquisition system, data received from the at least one other sensor (206) in a memory (212) coupled to the data acquisition system.

6. The data acquisition system, computer-readable medium (212) or computer-implemented method of any preceding claim, wherein the event associated with the aircraft engine (20) is based on an amount of change in a value of the thermal data characteristic meeting or exceeding a predetermined threshold.

7. The data acquisition system, computer-readable medium (212) or computer-implemented method of any preceding claim, wherein the identified event is associated with a blade of the aircraft engine (20) rubbing against another component of the aircraft engine (20).

8. The data acquisition system, computer-readable medium (212) or computer-implemented method of any of claims 1 to 6, wherein the identified event is associated with a thermal barrier coating spallation for a component of the aircraft engine (20).

9. The data acquisition system, computer-readable medium (212) or computer-implemented method of any of claims 1 to 6, wherein the identified event is associated with a cooling port blockage in the aircraft engine (20).

10. The data acquisition system, computer-readable medium (212) or computer-implemented method of any preceding claim, wherein the data received from the at least one other sensor (206) is stored in the memory (212) over a predetermined time period subsequent to identifying the event.
